(19) Europäisches Patentamt
European Patent Office
Office européen des brevets

(11) **EP 3 545 572 B1**

(12) **EUROPÄISCHE PATENTSCHRIFT**

(45) Veröffentlichungstag und Bekanntmachung des Hinweises auf die Patenterteilung:
**01.07.2020  Patentblatt 2020/27**

(21) Anmeldenummer: **17705092.9**

(22) Anmeldetag: **10.02.2017**

(51) Int Cl.:
*H01G 11/32* (2013.01)      *H01G 11/86* (2013.01)
*H01M 4/134* (2010.01)      *H01G 11/24* (2013.01)
*H01G 11/38* (2013.01)      *H01M 4/36* (2006.01)
*H01M 4/38* (2006.01)      *H01M 4/62* (2006.01)
*H01M 10/0525* (2010.01)      *H01M 4/02* (2006.01)

(86) Internationale Anmeldenummer:
**PCT/EP2017/053075**

(87) Internationale Veröffentlichungsnummer:
**WO 2018/145765 (16.08.2018 Gazette 2018/33)**

(54) **KERN-SCHALE-KOMPOSITPARTIKEL FÜR ANODENMATERIALIEN VON LITHIUM-IONEN-BATTERIEN**

CORE-SHELL-COMPOSITE PARTICLES FOR ANODE MATERIALS OF LITHIUM-ION BATTERIES

PARTICULES COMPOSITES COEUR-ÉCORCE POUR MATÉRIAUX D'ANODE DE BATTERIES LITHIUM-ION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.10.2019  Patentblatt 2019/40**

(73) Patentinhaber: **Wacker Chemie AG**
**81737 München (DE)**

(72) Erfinder:
• **AY, Sefer**
  **81369 München (DE)**

• **MAURER, Robert**
  **81373 München (DE)**
• **STOHRER, Jürgen**
  **82049 Pullach (DE)**
• **WEGENER, Jennifer**
  **80538 München (DE)**

(74) Vertreter: **Ege, Markus et al**
**Wacker Chemie AG**
**Hanns-Seidel-Platz 4**
**81737 München (DE)**

(56) Entgegenhaltungen:
**EP-A2- 1 024 544      EP-A2- 1 205 989
JP-A- 2008 277 232      US-A1- 2015 295 232**

**EP 3 545 572 B1**

**Beschreibung**

Die Erfindung betrifft Kern-Schale-Kompositpartikel, wobei der Kern Siliciumpartikel und Kohlenstoff enthält und die Schale auf Kohlenstoff basiert, sowie Verfahren zur Herstellung der Kern-Schale-Kompositpartikel und deren Einsatz in Anodenmaterialien für Lithium-Ionen-Batterien.

Wiederaufladbare Lithium-Ionen-Batterien sind momentan die kommerziell verfügbaren elektrochemischen Energiespeicher mit der höchsten spezifischen Energie von bis zu 250 Wh/kg. Sie werden vor allem im Bereich der tragbaren Elektronik, für Werkzeuge und auch für Transportmittel, wie beispielsweise Fahrräder oder Automobile, genutzt. Insbesondere für die Anwendung in Automobilen ist es jedoch notwendig, die Energiedichte der Batterien weiter deutlich zu steigern, um höhere Reichweiten der Fahrzeuge zu erreichen.

Als negatives Elektrodenmaterial ("Anode") wird in der Praxis gegenwärtig vor allem graphitischer Kohlenstoff verwendet. Graphitischer Kohlenstoff zeichnet sich durch seine stabilen Zykleneigenschaften. So erfährt graphitischer Kohlenstoff bei der Ein- und Auslagerung von Lithium nur geringe Volumenänderungen, beispielsweise im Bereich von 10% für die Grenzstöchiometrie von $LiC_6$. Nachteilig ist jedoch seine relativ niedrige elektrochemische Kapazität von theoretisch 372 mAh/g, die nur etwa ein Zehntel der mit Lithiummetall theoretisch erreichbaren elektrochemischen Kapazität entspricht.

Dagegen besitzt Silicium mit 4199 mAh/g die höchste bekannte Speicherkapazität für Lithium-Ionen. Nachteiligerweise erleiden Silicium enthaltende Elektrodenaktivmaterialien beim Laden bzw. Entladen mit Lithium extreme Volumenänderungen von bis ungefähr 300%. Durch diese Volumenänderung kommt es zu einer starken mechanischen Beanspruchung des Aktivmaterials und der gesamten Elektrodenstruktur, die durch elektrochemisches Mahlen zu einem Verlust der elektrischen Kontaktierung und damit zur Zerstörung der Elektrode unter Kapazitätsverlust führt. Weiterhin reagiert die Oberfläche des eingesetzten Silicium-Anodenmaterials mit Bestandteilen des Elektrolyten unter kontinuierlicher Bildung passivierender Schutzschichten (Solid Electrolyte Interface; SEI), was zu einem irreversiblen Verlust an mobilem Lithium führt.

Zur Verbesserung der Zyklenbeständigkeit von Lithium-Ionen-Batterien empfiehlt L. Chen in Materials Science and Engineering B, 131, 2006, Seiten 186 bis 190 den Einsatz von Kohlenstoffbeschichteten Silicium/Graphit/Kohlenstoff-Kompositpartikeln (Si/G/C) als Anodenaktivmaterial. Zu deren Herstellung wurden Dispersionen aus Siliciumpartikeln (Partikelgrößen < 100 nm), Graphit sowie Phenol-Formaldehyd-Harz sprühgetrocknet und die Sprühtrocknungsprodukte bei 1000°C carbonisiert unter Bildung von Si/G/C-Kompositpartikeln, die durch Beschichten mit einem Phenol-Formaldehyd-Harz und anschließende Carbonisierung mit Kohlenstoff beschichtet wurden. Die erhaltenen Partikel hatten Durchmesser von ungefähr 40 $\mu$m. Auch Z. Shao, Journal of Power Sources, 248, 2014, Seiten 721 bis 728 beschreibt Kohlenstoffbeschichtete Si/G/C-Komposite, wobei die Siliciumpartikel Partikeldurchmesser von 30 bis 50 nm aufweisen.

Aus Y. Cui, ACS NANO, 2015, Vol. 9, No. 3, Seiten 2540 bis 2547 sind poröse Si/C-Kompositpartikel bekannt mit einem porösen, Kohlenstoff-freien Kern aus aggregierten nanoskaligen Silicium-Primärpartikeln und einer Kohlenstoffbeschichtung als Schale. Die nanoskaligen Silicium-Primärpartikel haben Durchmesser von kleiner 10 nm. Die Herstellung der aggregierten nanoskaligen Silicium-Primärpartikel erfolgte durch thermische Disproportionierung von Siliciumsuboxiden SiOx. Die Kohlenstoffbeschichtung basierte auf einem carbonisierten Resorcin-Formaldehyd-Harz. Nach Herstellung der Kohlenstoffbeschichtung wurde Siliciumdioxid aus dem Kern mit Fluorwasserstoff-Lösung herausgeätzt. Solche Si/C-Kompositpartikel sind auch in WO2015051309 beschrieben, wobei die nanoskaligen Silicium-Primärpartikel hier Durchmesser von kleiner 200 nm haben können. Zudem offenbart WO2015051309 als alternative Ausführungsform poröse, stoff-basierte Kompositpartikel, in deren Poren unporöse Siliciumpartikel eingelagert sind.

US9209456 diskutiert unterschiedlichste Varianten von Kern-Schale-Kompositpartikeln mit porösem Kern. Bei der Schale kann es sich unter anderem um eine Kohlenstoffbeschichtung handeln, beim porösen Kern beispielsweise um poröse Siliciumpartikel. Für die Herstellung von porösen Siliciumpartikeln erwähnt die US9209456 das Reduzieren von Silica, das Ätzen von Si-Strukturen, Ultraschallbehandlung beim Kristallisieren von Siliciumschmelzen, oder das Einbringen von reaktiven Stoffen, wie Wasserstoff oder Brom, in Siliciumschmelzen und anschließendes Herausätzen von Poren. Die Partikel können auch in Nadel- oder Stab-Formen vorliegen. Größere Siliciumpartikel mit wenigen hundert Nanometern Durchmessern werden in der US9209456 als ungeeignet bezeichnet.

Die CN104362311 lehrt Si/C-Komposite, die nanoskalige-Siliciumpartikel mit Durchmessern von kleiner als 150 nm enthalten. Auch die US20110165468 offenbart Si/C-Komposite hergestellt durch Sprühtrocknung von Dispersionen enthaltend Si-Partikel und Sauerstoff-freie Polymere gefolgt von einer Pyrolyse der Polymere. Eine weitere Kohlenstoff-Hülle tragen die die Si/C-Komposite nicht. KR20150128432 beschreibt poröse, Kohlenstoffbeschichtete Si/C-Komposite. Deren Herstellung erfolgt, indem zunächst Suspensionen enthaltend Si-Partikel, Leitadditive (Graphen, Graphit oder CNT (carbon nano tubes)), Porenbildner (wasserlösliche Salze) sowie polymere Kohlenstoff-Precursor sprühgetrocknet und die Trocknungsprodukte einer Carbonisierung unterworfen werden. Die Carbonisierungsprodukte wurden anschließend nass-chemisch mit weiteren Kohlenstoff-Precursoren beschichtet und erneut carbonisiert. Aus den so erhaltenen Produkten wurden die Porenbildner mittels Wasser herausgelöst, was zwangsläufig undichte Kohlenstoff-Beschichtungen ergibt. Zudem zeigen die Produkt-Partikel eine signifikante Aggregation. Auch die porösen Si/C-Komposite der KR20150128430 wurden hergestellt durch Sprühtrocknen von Suspensionen enthaltend Si-Partikel, Leitadditive, Porenbildner und Kohlenstoff-Precursoren und anschließende Carbonisierung. Die wasserlöslichen Porenbildner wurden aus dem Komposit herausgelöst. Eine umhüllende Kohlenstoff-Beschichtung tragen die Si/C-Komposite der KR20150128430 nicht. Als relevanter Stand der Technik kann EP1 205 989 A2, der Siliciumpartikel und Kohlenstoff basierende Kern-Schale-Kompositpartikel offenbart, angesehen werden. Des Weiteren, bezieht sich JP 2008 277232 A auf ein Anodenmaterial für Li-Ionen-Batterien, wobei das negative Elektrodenmaterial aus Silicium/Kohlenstoff Kern-Schale-Kompositpartikel besteht und eine Methode zur dessen Herstellung.

Vor diesem Hintergrund bestand die Aufgabe, Siliciumpartikel enthaltende Kompositpartikel bereitzustellen, die bei Einsatz in Lithium-Ionen-Batterien eine hohe Zyklenbeständigkeit ermöglichen, insbesondere zu einer möglichst geringen SEI-Bildung führen und/oder das elektrochemische Mahlen reduzieren. Zudem sollten die Silicium enthaltenden Kompositpartikel nach Möglichkeit eine hohe mechanische Stabilität besitzen und möglichst wenig spröde sein.

Gegenstand der Erfindung sind Kern-Schale-Kompositpartikel, nach Anspruch 1, wobei die Schale auf Kohlenstoff basiert und unporös ist und der Kern ein poröses Aggregat ist enthaltend mehrere Siliciumpartikel, Kohlenstoff und gegebenenfalls weitere Komponenten, wobei die Siliciumpartikel durchschnittliche Partikelgrößen ($d_{50}$) von 0,5 bis 5 $\mu$m haben und im Kern enthalten sind mit $\geq$ 80 Gew.-%, bezogen auf das Gesamtgewicht der Kern-Schale-Kompositpartikel und die Kern-Schale-Kompositpartikel 91 bis 99 Gew.% Siliciumpartikel enthalten, bezogen auf das Gesamtgewicht der Kern-Schale-Kompositpartikel, mit der Maßgabe , dass die Kern-Schale-Kompositpartikel keinen Graphit enthalten.

Ein weiterer Gegenstand der Erfindung sind Verfahren zur Herstellung der erfindungsgemäßen Kern-Schale-Kompositpartikel, indem

1) Dispersionen enthaltend Siliciumpartikel mit durchschnittlichen Partikelgrößen ($d_{50}$) von 0,5 bis 5 $\mu$m, ein oder mehrere organische Bindemittel, ein oder mehrere Dispergiermittel und gegebenenfalls ein oder mehrere Additive getrocknet werden,

2) gegebenenfalls die Trocknungsprodukte aus Schritt 1) thermisch behandelt werden und

3) auf die Trocknungsprodukte aus Schritt 1) oder auf die thermisch behandelten Trocknungsprodukte aus Schritt 2) ein oder mehrere Kohlenstoff-Precursor carbonisiert werden.

Ein weiterer Gegenstand der Erfindung sind Kern-Schale-Kompositpartikel erhältlich nach den erfindungsgemäßen Verfahren.

Der Kern der Kern-Schale-Kompositpartikel ist im Wesentlichen ein Aggregat von mehreren Siliciumpartikeln. Die einzelnen Siliciumpartikel sind vorzugsweise nicht porös und/oder vorzugsweise nicht aggregiert. Ohne an eine Theorie gebunden zu sein, kann die Aggregierung der einzelnen Siliciumpartikel über den erfindungsgemäß in den Kern eingebrachten Kohlenstoff bewirkt sein.

Die volumengewichtete Partikelgrößenverteilung der Siliciumpartikel weist Durchmesser-Perzentile $d_{50}$ von vorzugsweise 600 nm bis 4,5 $\mu$m, mehr bevorzugt 700 nm bis 4,0 $\mu$m, besonders bevorzugt 750 nm bis 3,0 $\mu$m und am meisten bevorzugt 750 nm bis 2,0 $\mu$m auf.

Die Bestimmung der volumengewichteten Partikelgrößenverteilung erfolgt generell, soweit im Einzelfall nichts anderes angegeben ist, durch statische Laserstreuung unter Anwendung des Mie-Modells mit dem Messgerät Horiba LA 950 mit Alkoholen, wie beispielsweise Ethanol oder Isopropanol, oder vorzugsweise Wasser als Dispergiermedium.

Die zur Herstellung der Kern-Schale-Kompositpartikel eingesetzten Siliciumpartikel sind vorzugsweise nicht agglomeriert, besonders bevorzugt nicht aggregiert, am meisten bevorzugt nicht porös. Die eingesetzten Siliciumpartikel liegen also vorzugsweise in massiver Form vor. Aggregiert bedeutet, dass sphärische oder weitestgehend sphärische Primärpartikel, wie sie beispielsweise zunächst in Gasphasenprozessen bei der Herstellung der Siliciumpartikel gebildet werden, zu Aggregaten zusammengewachsen sind. Die Aggregierung von Primärpartikeln kann beispielsweise während der Herstellung der Siliciumpartikel in Gasphasenprozessen auftreten. Solche Aggregate können im weiteren Reaktionsverlauf Agglomerate bilden. Agglomerate sind eine lose Zusammenballung von Aggregaten. Agglomerate können mit typischerweise eingesetzten Knet- und Dispergierverfahren leicht wieder in die Aggregate aufgespalten werden. Aggregate lassen sich mit diesen Verfahren nicht oder nur in geringem Umfang in die Primärpartikel zerlegen. Aggregate und Agglomerate haben auf Grund ihrer Entstehung zwangsläufig ganz andere Sphärizitäten, Kornformen und Porositäten als die bevorzugt eingesetzten Siliciumpartikel. Das Vorliegen von Siliciumpartikeln in Form von Aggregaten oder Agglomeraten kann beispielsweise mittels herkömmlicher Raster-Elektronen-Mikroskopie (REM) sichtbar gemacht werden. Statische Lichtstreuungsmethoden zur Bestimmung der Teilchengrößenverteilungen oder Partikeldurchmessern von Siliciumpartikeln können dagegen nicht zwischen Aggregaten oder Agglomeraten unterscheiden.

Die BET-Oberflächen der Siliciumpartikel betragen vorzugsweise 0,1 bis 30,0 m$^2$/g, besonders bevorzugt 0,5 bis 20,0 m$^2$/g und am meisten bevorzugt 1,0 bis 16,0 m$^2$/g. Die BET-Oberfläche wird gemäß DIN 66131 (mit Stickstoff) bestimmt.

Die Poren der Siliciumpartikel sind vorzugsweise < 2 nm (Bestimmungsmethode: Porengrößenverteilung nach BJH (Gasadsorption) gemäß DIN 66134).

Die Siliciumpartikel liegen vorzugsweise in splittrigen Kornformen vor. Die Siliciumpartikel haben eine Sphärizität von vorzugsweise $0,3 \leq \psi \leq 1$, besonders bevorzugt $0,7 \leq \psi \leq 0,99$ und am meisten bevorzugt $0,8 \leq \psi \leq 0,98$. Die Sphärizität $\psi$ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Nach einer alternativen Definition ist die Sphärizität S das Verhältnis aus dem zu einem Kreis äquivalenten Durchmesser der Projektionsfläche A eines Partikels auf eine Ebene zum entsprechenden Durchmesser aus dem Umfang U dieser Projektion: $S = 2\sqrt{\pi A}/U$. Im Falle eines idealen Kreises hat $S$ den Wert 1. Für die erfindungsgemäßen Siliciumpartikel liegt die Sphärizität $S$ im Bereich von vorzugsweise 0,3 bis 1, besonders bevorzugt 0,7 bis 0,99 und am meisten bevorzugt 0,8 bis 0,98. Die Messung der Sphärizität S erfolgt durch grafische Auswertung von Aufnahmen einzelner Partikel mit einem optischen Mikroskop oder bei Partikeln < 10 $\mu$m mit einem Rasterelektronenmikroskop.

Die Siliciumpartikel basieren vorzugsweise auf elementarem Silicium. Unter elementarem Silicium ist hochreines, polykristallines Silicium, mit geringem Anteil an Fremdatomen (wie beispielsweise B, P, As), gezielt mit Fremdatomen dotiertes Silicium (wie beispielsweise B, P, As), aber auch Silicium aus metallurgischer Verarbeitung, welches elementare Verunreinigung (wie beispielsweise Fe, Al, Ca, Cu, Zr, Sn, Co, Ni, Cr, Ti, C) aufweisen kann, zu verstehen.

Falls die Siliciumpartikel ein Siliciumoxid enthalten, dann liegt die Stöchiometrie des Oxids $SiO_x$ bevorzugt im Bereich $0 < x < 1,3$. Falls die Siliciumpartikel ein Siliciumoxid mit höherer Stöchiometrie enthalten, dann ist dessen Schichtdicke auf der Oberfläche bevorzugt kleiner als 10 nm.

Wenn die Siliciumpartikel mit einem Alkalimetall M legiert sind, dann liegt die Stöchiometrie der Legierung $M_ySi$ bevorzugt im Bereich $0 < y < 5$. Die Siliciumpartikel können gegebenenfalls prälithiiert sein. Für den Fall, dass die Siliciumpartikel mit Lithium legiert sind, liegt die Stöchiometrie der Legierung $Li_zSi$ bevorzugt im Bereich $0 < z < 2,2$.

Besonders bevorzugt sind Siliciumpartikel, die $\geq$ 80 Mol% Silicium und/oder $\leq$ 20 Mol% Fremdatome, ganz besonders bevorzugt $\leq$ 10 Mol% Fremdatome enthalten.

Die Siliciumpartikel können beispielsweise mittels Gasphasenabscheidung, durch Atomisierungsverfahren, durch Plasmaverrundung oder vorzugsweise durch Mahlprozesse hergestellt werden. Bei Atomisierungsverfahren wird das Silicium aufgeschmolzen, in Tropfen überführt und dann abgekühlt unter Erstarrung, wodurch Silicium in partikulärer Form erhalten wird. Hierfür sind die gängigen Wasser- oder Gasatomisierungsverfahren geeignet. Als Mahlprozesse kommen beispielsweise Trocken- oder Nassmahlprozesse in Betracht. Hierbei werden vorzugsweise Planetenkugelmühlen, Strahlmühlen, wie Gegenstrahl oder Prallmühlen, oder Rührwerkskugelmühlen eingesetzt. Die Nassmahlung erfolgt im Allgemeinen in einer Suspension mit anorganischen oder organischen Dispergiermedien, wie Alkohole, Aliphaten oder Wasser.

Die Dispersionen in Schritt 1) enthalten vorzugsweise $\geq$ 70 Gew.-%, besonders bevorzugt 80 bis 99 Gew.-% und am meisten bevorzugt 90 bis 99 Gew.-% Siliciumpartikel, bezogen auf das Trockengewicht der Dispersionen in Schritt 1).

Bei den organischen Bindemitteln handelt es sich vorzugsweise um Polymere. Die organischen Bindemittel enthalten vorzugsweise ein oder mehrere funktionelle Gruppen ausgewählt aus der Gruppe umfassend Carboxyl-, Hydroxy-, Amid-, Ether- und Trialkoxy-Silyl-Gruppen. Am meisten bevorzugt sind Carboxyl-Gruppen.

Die organischen Bindemittel sind vorzugsweise löslich in Lösungsmitteln, insbesondere in Alkoholen, wie Methanol oder Ethanol, und/oder Wasser. Löslich bedeutet, dass die organischen Bindemittel im Lösungsmittel unter Normalbedingungen (23/50) nach DIN50014 zu vorzugsweise $\geq$ 2 Gew.-% löslich sind.

Bevorzugte organische Bindemittel sind Resorcin-Formaldehyd-Harz; Phenol-Formaldehyd-Harz; Lignin; Kohlenhydrate, wie Polysaccharide, Cellulose oder Cellulosederivate; Polyamide; Polyimide, inbesondere Polyamidimide; Polyether, Polyvinylalkohole; Homo- und Copolymere von Vinylestern, insbesondere Polyvinylacetat und Vinylacetat-Ethylen-Copolymere; Homo- und Copolymere der (Meth)Acrylsäure, insbesondere Poly(meth)acrylsäure und Styrol-(Meth)Acrylsäure-Copolymere; Polyacrylnitrile und Polyvinylpyrrolidone.

Bevorzugt sind auch Salze von Carbonsäure-Gruppen tragenden Polymeren. Bevorzugte Salze sind Alkali-, insbesondere Lithium-, Natrium- oder Kalium-Salze.

Besonders bevorzugte organische Bindemittel sind Carboxymethylcellulose oder deren Salze, Polyacrylsäure oder deren Salze, Polymethacrylsäure oder deren Salze und Polyvinylacetat.

Die Dispersionen in Schritt 1) enthalten vorzugsweise 1 bis 30 Gew.-%, besonders bevorzugt 1 bis 20 Gew.-% und am meisten bevorzugt 1 bis 10 Gew.-% organische Bindemittel, bezogen auf das Trockengewicht der Dispersionen in Schritt 1).

Als Dispergiermittel in Schritt 1) können organische und/oder anorganische Lösungsmittel eingesetzt werden. Es können auch Gemische aus zwei oder mehr Dispergiermitteln eingesetzt werden.

Ein Beispiel für ein anorganisches Lösungsmittel ist Wasser.

Organische Lösungsmittel sind beispielsweise Kohlenwasserstoffe, Ester oder vorzugsweise Alkohole. Die Alkohole enthalten vorzugsweise 1 bis 7 und besonders bevorzugt 2 bis 5 Kohlenstoffatome. Beispiele für Alkohole sind Methanol, Ethanol, Propanol, Butanol und Benzylalkohol. Kohlenwasserstoffe enthalten vorzugsweise 5 bis 10 und besonders bevorzugt 6 bis 8 Kohlenstoffatome. Kohlenwasserstoffe können beispielsweise aliphatisch oder aromatisch sein. Beispiele für Kohlenwasserstoffe sind Toluol und Heptan. Bei Estern handelt es sich im Allgemeinen um Ester von Carbonsäuren und Alkylalkoholen, wie beispielsweise Ethylacetat.

Bevorzugte Lösungsmittel sind Wasser und Alkohole, insbesondere Ethanol und 2-Propanol.

Die Dispersionen in Schritt 1) enthalten vorzugsweise 50 bis 95 Gew.-%, besonders bevorzugt 60 bis 90 Gew.-% und am meisten bevorzugt 70 bis 80 Gew.-% an Dispergiermittel, bezogen auf das Gesamtgewicht der Dispersionen in Schritt 1).

Beispiele für Additive in Schritt 1) elektrisch leitende Komponenten, Porenbildner, Säuren, Verlaufsmittel, Tenside oder Dotiermittel.

Beispiele für elektrisch leitende Komponenten sind Graphitpartikel, Leitruß, Kohlenstoff-Nanoröhrchen oder metallische Partikel, wie beispielsweise Kupferpartikel. Die Dispersionen in Schritt 1) enthalten vorzugsweise 0 bis 5 Gew.-% an elektrisch leitenden Komponenten, bezogen auf das Trockengewicht der Dispersionen in Schritt 1). Gemäß dieser Erfindung, enthalten die Kern-Schale-Kompositpartikel keine elektrisch leitenden Komponenten, insbesondere keinen Graphit.

Die Porenbildner können anorganischer oder vorzugsweise organischer Natur sein. Beispiele für anorganische Porenbildner Siliciumdioxid, Magnesiumoxid, Natriumchlorid und Magnesiumcarbonat. Beispiele für organische Porenbildner sind Polymere von ethylenisch ungesättigten Monomeren, Melaminharze und Harnstoffharze. Bevorzugte organische Porenbildner werden ausgewählt aus der Gruppe umfassend Polyethylen, Polystyrol, Polymethylmethacrylat, Polyvinylacetat-Ethylen-Acrylat-Terpolymer, Styrol-Butadien-Copolymer und Melamin-Formaldehyd-Harze.

Die Dispersionen in Schritt 1) enthalten vorzugsweise 0 bis 40 Gew.-%, besonders bevorzugt 5 bis 30 Gew.-% und am meisten bevorzugt 10 bis 20 Gew.-% Porenbildner, bezogen auf das Trockengewicht der Dispersionen in Schritt 1). Alternativ kann auf Porenbildner verzichtet werden.

Die Säuren können anorganischer oder vorzugsweise organischer Natur sein. Beispiele für organische Säuren sind aromatische oder aliphatische Sulfonsäuren, wie para-Toluolsulfonsäure; mono- oder multifunktionale aliphatische Carbonsäuren, wie Ameisensäure, Essigsäure, Ascorbinsäure, Zitronensäure, Trifluoressigsäure und Fettsäuren, wie Stearinsäure; aromatische Carbonsäuren, wie Terephthalsäure und Benzoesäure; und Aminosäuren, wie Glycin. Beispiele für anorganische Säuren sind Schwefelsäure, Phosphorsäure, Salzsäure und Salpetersäure. Die Schritt 1) enthalten vorzugsweise $\leq$ 5 Gew.-%, besonders bevorzugt $\leq$ 2 Gew.-% organische Säuren. Die Dispersionen in Schritt 1) enthalten vorzugsweise $\leq$ 1 Gew.-%, besonders bevorzugt $\leq$ 0,5 Gew.-% anorganische Säuren. Die Angaben in Gew.-% beziehen sich je auf das Trockengewicht der Dispersionen in Schritt 1).

Die Dispersionen in Schritt 1) enthalten vorzugsweise 0 bis 40 Gew.-%, besonders bevorzugt 0,01 bis 20 Gew.-% und am meisten bevorzugt 0,1 bis 5 Gew.-% Additive, bezogen auf das Trockengewicht der Dispersionen in Schritt 1). In einer bevorzugten, alternativen Ausführungsform werden in Schritt 1 keine Additive eingesetzt.

Die Dispersionen in Schritt 1) haben einen Feststoffgehalt von vorzugsweise 5 bis 40%, besonders bevorzugt 10 bis 30% und am meisten bevorzugt 15 bis 25%. Die Dispersionen in Schritt 1) haben einen pH-Wert von vorzugsweise $\leq$ 7,5, besonders bevorzugt 1 bis 7. Die in Schritt 1) zum Trocknen eingesetzten Dispersionen liegen vorzugsweise in einem fließfähigen Zustand vor.

Das Herstellen der Dispersionen in Schritt 1) kann durch Mischen ihrer einzelnen Bestandteile erfolgen und ist an keine besondere Vorgehensweise gebunden. Die Siliciumpartikel werden bevorzugt in Form von Dispersionen, insbesondere alkoholischen Dispersionen, oder als Feststoff eingesetzt. Die organischen Bindemittel und/oder Porenbildner können in fester Form oder vorzugsweise in Form von Lösungen oder Dispersionen, insbesondere in Form von wässrigen Lösungen oder wässrigen Dispersionen, eingesetzt werden. Das Mischen kann in gängigen Mischvorrichtungen durchgeführt werden, beispielsweise in Rotor-Stator-Maschinen, Hochenergiemühlen, Planetenknetern, Rührwerkskugelmühlen, Rüttelplatten, Dissolvern, Rollbänken oder Ultraschallgeräten.

Das Trocknen in Schritt 1) kann beispielsweise mittels Wirbelschichttrocknung, thermischer Trocknung, Trocknung im Vakuum, Kontakttrocknung, Konvektionstrocknung oder mittels Sprühtrocknung erfolgen. Bevorzugt ist die Sprühtrocknung. Es können die hierfür gängigen Bedingungen und Anlagen Anwendung finden, wie beispielsweise Sprühtrockner, Wirbelschichttrockner oder Schaufeltrockner. Bevorzugt sind Sprühtrockner und Wirbelschichttrockner.

Das Trocknen kann in Umgebungsluft, synthetischer Luft oder vorzugsweise in einer Inertgasatmosphäre, beispielsweise in Stickstoff- oder Argon-Atmosphäre, erfolgen. Im Allgemeinen wird bei Normaldruck oder besonders bei reduziertem Druck, beispielsweise bei 1 bis $10^{-3}$ mbar, insbesondere 100 bis $10^{-3}$ mbar getrocknet. Die Trocknung erfolgt im Allgemeinen bei Temperaturen von bevorzugt $\leq$ 200°C und besonders bevorzugt $\leq$ 150°C.

Die Trocknung im Vakuum erfolgt vorzugsweise bei 40°C bis 100°C und 1 bis $10^{-3}$ mbar, insbesondere 100 bis $10^{-3}$ mbar.

Die Sprühtrocknung kann beispielsweise in Sprühtrocknungsanlagen erfolgen, in denen die Zerstäubung mittels Ein-, Zwei- oder Mehrstoffdüsen oder mit einer rotierenden Scheibe erfolgt. Die Eintrittstemperatur der zu trocknenden Dispersion in die Sprühtrocknungsanlage ist vorzugsweise größer oder gleich der Siedetemperatur der zu trocknenden Dispersion und besonders bevorzugt um ≥ 10°C höher als die Siedetemperatur der zu trocknenden Dispersion. Beispielsweise beträgt die Eintrittstemperatur vorzugsweise 80°C bis 200°C, besonders bevorzugt 100°C bis 150°C. Die Austrittstemperatur ist vorzugsweise ≥ 30°C, besonders bevorzugt ^ 40°C und am meisten bevorzugt ≥ 50°C. Im Allgemeinen liegt die Austrittstemperatur im Bereich von 30°C bis 100°C, bevorzugt von 45°C bis 90°C. Der Druck in der Sprühtrocknungsanlage ist bevorzugt der Umgebungsdruck. In der Sprühtrocknungsanlage haben die versprühten Dispersionen Primärtröpfchengrößen von vorzugsweise 1 bis 1000 $\mu$m, besonders bevorzugt 2 bis 600 $\mu$m und am meisten bevorzugt 5 bis 300 $\mu$m. Über die Einstellungen der Inlet-Temperatur, des Gasflusses (Flow), sowie der Pumprate (Feed), die Wahl der Düse, des Aspirators, die Wahl der Dispergiermittel oder auch der Feststoffkonzentration der Sprühdispersion lassen sich die Größe der Primärpartikel, Restfeuchte im Produkt und die Ausbeute des Produkts in an sich bekannter Weise einstellen. Beispielsweise werden bei höherer Feststoffkonzentration der Sprühdispersion Partikel mit größeren Partikelgrößen erhalten, ein höherer Sprühgasfluss (Flow) führt dagegen zu kleineren Partikelgrößen.

Die in Schritt 1) nach der Trocknung erhaltenen Produkte enthalten vorzugsweise ≤ 10 Gew.-%, mehr bevorzugt ≤ 5 Gew.-%, noch mehr bevorzugt ≤ 3 Gew.-% und am meisten bevorzugt ≤ 1 Gew.-% Dispergiermittel, bezogen auf das Gesamtgewicht der Trocknungsprodukte aus Schritt 1).

Die Trocknungsprodukte aus Schritt 1) liegen vorzugsweise in Form von Partikel, insbesondere in Form von Agglomeraten vor. Agglomerate können mit Knet- oder Dispergierverfahren leicht wieder in die Ausgangsstoffe aufgespalten werden. Bei Agglomeraten kann es sich um lose Zusammenballungen ihrer einzelnen Bestandteile handeln. Vorzugsweise sind die Trocknungsprodukte redispergierbar, insbesondere in Wasser. Im Zuge des Redispergierens zerfallen die Trocknungsprodukte aus Schritt 1) im Allgemeinen wieder in ihre Ausgangsbestandteile, insbesondere in Siliciumpartikel und organische Bindemittel.

Die Trocknungsprodukte aus Schritt 1) weisen Durchmesser-Perzentile $d_{50}$ von vorzugsweise 1 bis 30 $\mu$m, besonders bevorzugt 2 bis 20 $\mu$m auf (Bestimmungsmethode: REM).

Die Trocknungsprodukte aus Schritt 1) haben eine Sphärizität von vorzugsweise 0,3 ≤ $\psi$ ≤ 1,0, besonders bevorzugt 0,7 ≤ $\psi$ ≤ 0,99 und am meisten bevorzugt 0,8 ≤ $\psi$ ≤ 0,98.

Die Porosität der Trocknungsprodukte aus Schritt 1) beträgt vorzugsweise 30 bis 75% und besonders bevorzugt 35 bis 70% (Bestimmungsmethode: Hg-Porosimetrie oder vorzugsweise in Kombination mit He-Pyknometrie gemäß DIN 66137-2).

Unter Porosität wird allgemein die partikuläre Porosität verstanden, also das Volumen der Poren innerhalb der jeweiligen Partikel. Hiervon zu unterscheiden ist das Hohlraumvolumen, welches sich zwischen den Partikeln, also in Partikelzwischenräumen befindet. Die partikuläre Porosität bezieht sich also allgemein auf das Porenvolumen, das sich innerhalb der Partikel aus Schritt 1), innerhalb des Kerns der erfindungsgemäßen Partikel oder innerhalb der Kern-Schale-Partikel befindet. Die erfindungsgemäße Porosität kann vielfach beispielsweise mittels Hg-Porosimetrie oder Xylol- beziehungsweise He-Pyknometrie bestimmt werden.

Die thermische Behandlung in Schritt 2) erfolgt bei Temperaturen von vorzugsweise 200 bis 500°C, besonders bevorzugt 220 bis 400°C. Schritt 2) kann unter beliebigen Drücken durchgeführt werden. Vorzugsweise wird bei einem Druck von 0,5 bis 2 bar, insbesondere 0,8 bis 1,5 bar gearbeitet. Besonders bevorzugt wird bei Umgebungsdruck thermisch behandelt.

Bei der thermischen Behandlung kann beispielsweise eine Zersetzung der organischen Bindemittel, beispielsweise ein Abspaltung von Kohlendioxid, Kohlenmonoxid der Wasser, oder eine Carbonisierung der organischen Bindemittel erfolgen oder eine Reaktion mit den Siliciumpartikeln stattfinden.

Die thermische Behandlung kann in Umgebungsluft, synthetischer Luft oder in einer Inertgasatmosphäre, beispielsweise in Stickstoff- oder Argon-Atmosphäre, durchgeführt werden.

Die Dauer der thermischen Behandlung kann beispielsweise 1 bis 10 Stunden, vorzugsweise 2 bis 8 Stunden und besonders bevorzugt 3 bis 6 Stunden betragen.

Die thermische Behandlung kann in herkömmlichen Reaktoren durchgeführt werden, beispielsweise in einem Kalzinierofen, Rohrofen, insbesondere einem Drehrohrofen, Wirbelschichtreaktor, Fließbettreaktor oder einem Trockenschrank. Besonders bevorzugt sind Kalzinieröfen, Wirbelschichtreaktoren und Drehrohröfen.

Die Produkte der thermischen Behandlung aus Schritt 2) liegen vorzugsweise in Form von Partikeln, insbesondere in Form von Aggregaten vor. Aggregate können mit üblichen Knet- oder Dispergierverfahren im Allgemeinen nicht in ihre Ausgangsstoffe zerlegt werden. Vorzugsweise sind die Produkte der thermischen Behandlung nicht redispergierbar, insbesondere nicht in Wasser.

Die Produkte aus Schritt 2) weisen Durchmesser-Perzentile $d_{50}$ von vorzugsweise 1 bis 30 $\mu$m, besonders bevorzugt 2 bis 20 $\mu$m auf.

Die Porosität der Produkte aus Schritt 2) beziehungsweise die Porosität des Kerns der Kern-Schale-Kompositpartikel beträgt vorzugsweise 30 bis 75% und besonders bevorzugt 40 bis 65% (Bestimmungsmethode: Hg-Porosimetrie oder vorzugsweise mit He-Pyknometrie gemäß DIN 66137-2).

Die Produkte aus Schritt 2) haben eine Sphärizität von vorzugsweise $0,3 \leq \psi \leq 1,0$, besonders bevorzugt $0,7 \leq \psi \leq 0,98$ und am meisten bevorzugt $0,8 \leq \psi \leq 0,95$.

Die Produkte aus Schritt 2) enthalten vorzugsweise $\geq$ 90 Gew.-%, besonders bevorzugt $\geq$ 92 Gew.-%, noch mehr bevorzugt $\geq$ 94 Gew.-% und am meisten bevorzugt $\geq$ 98 Gew.-% Siliciumpartikel. Die Siliciumpartikel sind zu vorzugsweise $\leq$ 99,9 Gew.-%, besonders bevorzugt $\leq$ 99 Gew.-% und am meisten bevorzugt $\leq$ 95 Gew.-% enthalten. Die Angaben in Gew.-% beziehen sich auf das Gesamtgewicht der Produkte aus Schritt 2).

Kohlenstoff ist zu vorzugsweise 0,01 bis 10 Gew.-%, besonders bevorzugt 0,02 bis 7 Gew.-% und am meisten bevorzugt 0,02 bis 5 Gew.-% enthalten, bezogen auf das Gesamtgewicht der Produkte aus Schritt 2).

Die Schale der Kern-Schale-Kompositpartikeln basiert auf Kohlenstoff, insbesondere auf amorphem Kohlenstoff. Die Schale ist unporös. Die Carbonisierung der erfindungsgemäßen Kohlenstoff-Precursoren führt zwangsläufig zu einer unporösen Schale. Die Schale umhüllt den Kern der Kern-Schale-Kompositpartikel vorzugsweise zumindest teilweise und besonders bevorzugt vollständig.

Die Poren der Schale sind vorzugsweise < 10 nm, besonders bevorzugt $\leq$ 5 nm und am meisten bevorzugt $\leq$ 2 nm (Bestimmungsmethode: Porengrößenverteilung nach BJH (Gasadsorption) gemäß DIN 66134).

Die Schale hat vorzugsweise eine Porosität von $\leq$ 2% und besonders bevorzugt $\leq$ 1% (Bestimmungsmethode: BJH-Messung).

Die Schale ist im Allgemeinen undurchlässig für flüssige Medien, insbesondere für wässrige oder organische Lösungsmittel oder Lösungen. Besonders bevorzugt ist die Schale undurchlässig für wässrige oder organische Elektrolyte. Die Flüssigkeitsdichtigkeit der Kern-Schale-Kompositpartikel ist vorzugsweise $\geq$ 95%, besonders bevorzugt $\geq$ 96% und am meisten bevorzugt $\geq$ 97%. Die Flüssigkeitsdichtigkeit kann beispielsweise bestimmt werden entsprechend der weiter unten für die Beispiele angegebenen Bestimmungsmethode "ichtigkeits-Test".

Der Anteil der Schale beträgt vorzugsweise 1 bis 10 Gew.-%, besonders bevorzugt 3 bis 7 Gew.-% und am meisten bevorzugt 2 bis 8 Gew.-%, bezogen auf das Gesamtgewicht der Kern-Schale-Kompositpartikel.

Die Schale der Kern-Schale-Kompositpartikel ist erhältlich durch Carbonisieren von einem oder mehreren Kohlenstoff-Precursoren, wie beispielsweise Teere oder Peche, insbesondere hochschmelzende Peche, Polyacrylnitril oder Kohlenwasserstoffe mit 1 bis 20 Kohlenstoffatomen. Als Pech ist mesogenes Pech, Mesophasen-Pech, Petrolpech oder Steinkohlenteerpech bevorzugt. Beispiele für Kohlenwasserstoffe sind aliphatische Kohlenwasserstoffe mit 1 bis 10 Kohlenstoffatomen, insbesondere 1 bis 6 Kohlenstoffatomen, vorzugsweise Methan, Ethan, Propan, Propylen, Butan, Buten, Pentan, Isobutan, Hexan; ungesättigte Kohlenwasserstoffe mit 1 bis 4 Kohlenstoffatomen, wie Ethylen, Acetylen oder Propylen; aromatische Kohlenwasserstoffe, wie Benzol, Toluol, Styrol, Ethylbenzol, Diphenylmethan oder Naphthalin; weitere aromatische Kohlenwasserstoffe, wie Phenol, Cresol, Nitrobenzol, Chlorbenzol, Pyridin, Anthracen, Phenanthren.

Bevorzugte Kohlenstoff-Precursoren für die Schale sind mesogenes Pech, Mesophasen-Pech, Petrolpech, Steinkohlenteerpech, Methan, Ethan, Ethylen, Acetylen, Benzol, Toluol. Besonders bevorzugt sind Acetylen, Toluol und insbesondere Ethylen, Benzol und SoftCarbon aus Petrolpech oder Steinkohlenteerpech.

In Schritt 3) des erfindungsgemäßen Verfahrens werden ein oder mehrere Kohlenstoff-Precursoren auf die Trocknungsprodukte aus Schritt 1) oder auf die thermisch behandelten Trocknungsprodukte aus Schritt 2) beziehungsweise auf den Kern der erfindungsgemäßen Kern-Schale-Kompositpartikel carbonisiert.

Kohlenwasserstoffe mit 1 bis 20 Kohlenstoffatomen werden vorzugsweise über das CVD-Verfahren aufgebracht. Das CVD-Verfahren kann auf herkömmliche Weise durchgeführt werden.

Die anderen Kohlenstoff-Precursoren für die Schale werden vorzugsweise mittels Beschichtung auf die Produkte von Schritt 1) und/oder Schritt 2) aufgebracht und anschließend thermisch carbonisiert. Das Beschichten kann beispielsweise erfolgen, indem Dispersionen enthaltend Kohlenstoff-Precursoren und Produkte von Schritt 1) und/oder Schritt 2) zur Ausfällung gebracht werden. Hierbei können sich Kohlenstoff-Precursoren auf den Produkten von Schritt 1) und/oder Schritt 2) abscheiden. Durch anschließende Filtration, Zentrifugation und/oder Trocknung können die Beschichtungsprodukte isoliert werden. Das Carbonisieren kann thermisch erfolgen, beispielsweise bei Temperaturen von 400 bis 1400°C, vorzugsweise 500 bis 1100°C und besonders bevorzugt 700 bis 1000°C. Hierfür können die herkömmlichen Reaktoren und sonstige übliche Reaktionsbedingungen Anwendung finden.

Gegebenenfalls vorhandene organische Bindemittel aus Schritt 1) oder deren Folgeprodukte aus Schritt 2) können in Schritt 3) auch carbonisiert werden. Nach der Carbonisierung in Schritt 3) sind im Allgemeinen keine organischen Bindemittel mehr vorhanden.

Gegebenenfalls können in einem anschließenden Schritt 4) Unter- oder Überkorn, beispielsweise durch typische Klassierungstechniken, wie Sieben oder Sichten, entfernt werden.

Die einzelnen Kern-Schale-Kompositpartikel können beispielsweise als isolierte Partikel oder als lockere Agglomerate vorliegen. Die Kern-Schale-Kompositpartikel können in Form von Splittern oder Flakes oder vorzugsweise in sphärischer Form vorkommen.

Die volumengewichtete Partikelgrößenverteilungen mit Durchmesser-Perzentilen $d_{50}$ der Kern-Schale-Kompositpartikel beträgt vorzugsweise $\leq$ 30 pm, besonders bevorzugt $\leq$ 20 $\mu$m und am meisten bevorzugt $\leq$ 10 $\mu$m, und/oder

vorzugsweise $\geq 1\,\mu$m, besonders bevorzugt $\geq 2\,\mu$m und am meisten bevorzugt $\geq 3\,\mu$m.

Die Partikelgrößenverteilung der Kern-Schale-Kompositpartikel ist bevorzugt monomodal, kann aber auch bimodal oder polymodal sein und ist vorzugsweise schmal. Die volumengewichtete Partikelgrößenverteilung der Kern-Schale-Kompositpartikel ist charakterisiert durch einen Wert für $(d_{90}-d_{10}/d_{50}$ (Spannweite der Verteilung) von vorzugsweise $\leq 2,5$, besonders bevorzugt $\leq 2$ und am meisten bevorzugt $\leq 1$. Der Wert für $(d_{90}-d_{10})/d_{50}$ ist vorzugsweise $\geq 0,4$, besonders bevorzugt $\geq 0,6$ und am meisten bevorzugt $\geq 0,8$.

Die Schale bzw. die Kern-Schale-Kompositpartikel sind durch BET-Oberflächen charakterisiert von vorzugsweise $\leq 50$ m$^2$/g, besonders bevorzugt $\leq 25$ m$^2$/g und am meisten bevorzugt $\leq 10$ m$^2$/g (Bestimmung gemäß DIN 66131 (mit Stickstoff)).

Die Kern-Schale-Kompositpartikel haben Sphärizitäten von vorzugsweise $0,3 \leq \psi \leq 1$, besonders bevorzugt $0,7 \leq \psi \leq 0,99$ und am meisten bevorzugt $0,8 \leq \psi \leq 0,98$.

Die Schale hat eine Schichtdicke, insbesondere eine mittlere Schichtdicke, von vorzugsweise 1 bis 100 nm, besonders bevorzugt 3 bis 50 nm und am meisten bevorzugt 5 bis 20 nm. Die Schale weist zumindest an einer Stelle der Kern-Schale-Kompositpartikel eine Schichtdicke von vorzugsweise 1 bis 100 nm, besonders bevorzugt 3 bis 50 nm und am meisten bevorzugt 5 bis 20 nm (Bestimmungsmethode: HR-TEM).

Der Kern eines Kern-Schale-Kompositpartikels enthält vorzugsweise $\geq 100$ besonders bevorzugt $\geq 300$ und am meisten bevorzugt $\geq 500$ Siliciumpartikel (Bestimmungsmethode: REM), insbesondere mit erfindungsgemäßen durchschnittlichen Partikelgrößen $d_{50}$.

Die Siliciumpartikel sind vorzugsweise allesamt im Kern der Kern-Schale-Kompositpartikel enthalten.

Bei dem in den Kern-Schale-Kompositpartikeln enthaltenen Kohlenstoff kann es sich ausschließlich um einen durch Carbonisierung erhaltenen Kohlenstoff oder durch Additiv eingebrachten Kohlenstoff handeln. Alternativ können auch weitere Komponenten als Kohlenstoffquelle enthalten sein, wie beispielsweise Graphit, Leitruß, Carbon Nanotubes (CNTs) oder andere Kohlenstoffmodifikationen. Bevorzugt ist ein hoher Anteil des Kohlenstoffs der Kern-Schale-Kompositpartikel durch Carbonisierung erhalten, beispielsweise bevorzugt $\geq 40$ Gew.-%, besonders bevorzugt $\geq 70$ Gew.-% und am meisten bevorzugt $\geq 90$ Gew.-%, bezogen auf die Gesamtmasse des Kohlenstoffs der Kern-Schale-Kompositpartikel.

Die Kern-Schale-Kompositpartikel enthalten vorzugsweise 80 bis 99 Gew.-%, mehr bevorzugt 82 bis 98 Gew.-%, besonders bevorzugt 85 bis 97 Gew.-%, noch mehr bevorzugt 90 bis 96 Gew.-% und am meisten bevorzugt 91 bis 95 Gew.-% Siliciumpartikel, bezogen auf das Gesamtgewicht der Kern-Schale-Kompositpartikel. Kohlenstoff ist in den Kern-Schale-Kompositpartikeln zu vorzugsweise 1 bis 20 Gew.-%, besonders bevorzugt 3 bis 15 Gew.-% und am meisten bevorzugt 5 bis 10 Gew.-% enthalten, bezogen auf das Gesamtgewicht der Kern-Schale-Kompositpartikel.

Gegebenenfalls können auch Sauerstoff und vorzugsweise Stickstoff in den Kern-Schale-Kompositpartikeln enthalten sein; diese liegen vorzugsweise chemisch gebunden in Form von Heterocyclen vor, beispielsweise als Pyridin- und Pyrrol-Einheiten (N), Furan (O) oder Oxazole (N, O). Der Sauerstoff-Gehalt der Kern-Schale-Kompositpartikel ist vorzugsweise $\leq 10$ Gew-%, besonders bevorzugt $\leq 8$ Gew-% und am meisten bevorzugt $\leq 5$ Gew-%. Der Stickstoff-Gehalt der Kern-Schale-Kompositpartikel ist vorzugsweise im Bereich von $\leq 1$ Gew.-% und besonders bevorzugt 0,01 bis 0,3 Gew.-%. Die Angaben in Gew.-% beziehen sich jeweils auf das Gesamtgewicht der Kern-Schale-Kompositpartikel und addieren sich insgesamt zu 100 Gew.-% auf.

Ein weiterer Gegenstand der vorliegenden Erfindung ist die Verwendung der erfindungsgemäßen Kern-Schale-Kompositpartikel in Elektrodenmaterialien, insbesondere in Anodenmaterialien, für Lithiumionen-Batterien, insbesondere zur Herstellung der negativen Elektroden von Lithiumionen-Batterien.

Die Elektrodenmaterialien enthalten vorzugsweise ein oder mehrere Bindemittel, gegebenenfalls Graphit, gegebenenfalls eine oder mehrere weitere elektrisch leitende Komponenten und gegebenenfalls ein oder mehrere Additive, dadurch gekennzeichnet, dass ein oder mehrere Kern-Schale-Kompositpartikel enthalten sind.

Bevorzugte Rezepturen für die Elektrodenmaterialien enthalten vorzugsweise 50 bis 95 Gew.-%, insbesondere 60 bis 85 Gew.-% Kern-Schale-Kompositpartikel; 0 bis 40 Gew.-%, insbesondere 0 bis 20 Gew.-% weitere elektrisch leitende Komponenten; 0 bis 80 Gew.-%, insbesondere 5 bis 30 Gew.-% Graphit; 0 bis 25 Gew.-%, vorzugsweise 1 bis 20 Gew.-%, besonders bevorzugt 5 bis 15 Gew.-% Bindemittel; und gegebenenfalls 0 bis 80 Gew.-%, insbesondere 0,1 bis 5 Gew.-% Additive; wobei sich die Angaben in Gew.-% auf das Gesamtgewicht des Anodenmaterials beziehen und sich die Anteile aller Bestandteile des Anodenmaterials auf 100 Gew.-% aufsummieren.

Ein weiterer Gegenstand der Erfindung sind Lithium-Ionen-Batterien umfassend eine Kathode, eine Anode, einen Separator und einen Elektrolyt, dadurch gekennzeichnet, dass die Anode erfindungsgemäße Kern-Schale-Kompositpartikel enthält.

In einer bevorzugten Ausführungsform der Lithium-Ionen-Batterien ist das Anodenmaterial der vollständig geladenen Lithium-Ionen-Batterie nur teilweise lithiiert.

Ein weiterer Gegenstand der vorliegenden Erfindung sind Verfahren zum Beladen von Lithium-Ionen-Batterien umfassend eine Kathode, eine Anode, einen Separator und einen Elektrolyt, dadurch gekennzeichnet, dass die Anode erfindungsgemäße Kern-Schale-Kompositpartikel enthält; und das Anodenmaterial beim vollständigen Laden der Lithium-Ionen-Batterie nur teilweise lithiiert wird.

Ein weiterer Gegenstand der Erfindung ist die Verwendung der erfindungsgemäßen Anodenmaterialien in Lithium-Ionen-Batterien, die so konfiguriert sind, dass die Anodenmaterialien im vollständig geladenen Zustand der Lithium-Ionen-Batterien nur teilweise lithiiert sind.

Neben den Kern-Schale-Kompositpartikeln können zur Herstellung der Elektrodenmaterialien und Lithium-Ionen-Batterien die hierfür gängigen Ausgangsmaterialien eingesetzt werden und die hierfür üblichen Verfahren zur Herstellung der Elektrodenmaterialien und Lithium-Ionen-Batterien Anwendung finden, wie beispielsweise in der WO 2015/117838 oder der Patentanmeldung mit der Anmeldenummer DE 102015215415.7 beschrieben.

Die Lithium-Ionen-Batterien sind vorzugsweise so aufgebaut beziehungsweise so konfiguriert und/oder werden vorzugsweise so betrieben, dass das Material der Anode (Anodenmaterial), insbesondere die Kern-Schale-Kompositpartikel, in der vollständig geladenen Batterie nur teilweise lithiiert ist. Vollständig geladen bezeichnet den Zustand der Batterie, in dem das Anodenmaterial der Batterie, insbesondere die Kern-Schale-Kompositpartikel, ihre höchste Lithiierung aufweist. Teilweise Lithiierung des Anodenmaterials bedeutet, dass das maximale Lithiumaufnahmevermögen der Aktivmaterialpartikel im Anodenmaterial, insbesondere der Kern-Schale-Kompositpartikel, nicht ausgeschöpft wird.

Das Verhältnis der Lithiumatome zu den Siliciumatomen in der Anode einer Lithium-Ionen-Batterie (Li/Si-Verhältnis) kann beispielsweise über den elektrischen Ladungsfluss eingestellt werden. Der Lithiierungsgrad des Anodenmaterials beziehungsweise der im Anodenmaterial enthaltenen Siliciumpartikel ist proportional zur geflossenen elektrischen Ladung. Bei dieser Variante wird beim Laden der Lithium-Ionen-Batterie die Kapazität des Anodenmaterials für Lithium nicht voll ausgeschöpft. Dies resultiert in einer teilweisen Lithiierung der Anode.

Bei einer alternativen, bevorzugten Variante wird das Li/Si-Verhältnis einer Lithium-Ionen-Batterie durch das Anoden zu Kathoden-Verhältnis (Zellbalancing) eingestellt. Hierbei werden die Lithium-Ionen-Batterien so ausgelegt, dass das Lithiumaufnahmevermögen der Anode vorzugsweise größer ist als das Lithiumabgabevermögen der Kathode. Dies führt dazu, dass in der vollständig geladenen Batterie das Lithiumaufnahmevermögen der Anode nicht voll ausgeschöpft ist, d.h. dass das Anodenmaterial nur teilweise lithiiert ist.

Bei der erfindungsgemäßen Lithium-Ionen-Batterie ist das Verhältnis der Lithium-Kapazität der Anode zur Lithium-Kapazität der Kathode (Anoden zu Kathoden-Verhältnis) bevorzugt $\geq 1{,}15$, besonders bevorzugt $\geq 1{,}2$ und am meisten bevorzugt $\geq 1{,}3$. Der Begriff Lithium-Kapazität bezeichnet hierbei vorzugsweise die nutzbare Lithium-Kapazität. Die nutzbare Lithium-Kapazität ist ein Maß für die Fähigkeit einer Elektrode, Lithium reversibel zu speichern. Die Bestimmung der nutzbaren Lithium-Kapazität kann beispielsweise über Halbzellmessungen der Elektroden gegen Lithium erfolgen. Die nutzbare Lithium-Kapazität wird in mAh bestimmt. Die nutzbare Lithium-Kapazität entspricht der gemessenen Delithiierungskapazität bei einer Lade- und Entladerate von C/2 im Spannungsfenster von 0,8 V bis 5 mV. C in C/2 bezieht sich auf die spezifische Kapazität der Elektrodenbeschichtung.

Die Anode wird mit vorzugsweise $\leq 1500$ mAh/g, besonders bevorzugt $\leq 1400$ mAh/g und am meisten bevorzugt $\leq 1300$ mAh/g beladen, bezogen auf die Masse der Anode. Die Anode wird bevorzugt mit mindestens 600 mAh/g, besonders bevorzugt $\geq 700$ mAh/g und am meisten bevorzugt $\geq 800$ mAh/g beladen, bezogen auf die Masse der Anode. Diese Angaben beziehen sich vorzugsweise auf die vollständig geladene Lithium-Ionen-Batterie.

Der Lithiierungsgrad von Silicium beziehungsweise die Ausnutzung der Kapazität von Silicium für Lithium (Si-Kapazitätsnutzung $\alpha$) kann beispielsweise bestimmt werden, wie in der Patentanmeldung mit der Anmeldenummer DE 102015215415.7 auf Seite 11, Zeile 4 bis Seite 12, Zeile 25 beschrieben, insbesondere an Hand der dort genannten Formel für die Si-Kapazitätsnutzung $\alpha$ und den ergänzenden Angaben unter den Überschriften "Bestimmung der Delithiierungs-Kapazität $\beta$" und "Bestimmung des Si-Gewichtsanteils $\omega_{Si}$" ("incorporated by reference").

Bei der erfindungsgemäßen teilweisen Lithiierung beträgt das Li/Si-Verhältnis im Anodenmaterial im vollständig geladenen Zustand der Lithium-Ionen-Batterie vorzugsweise $\leq 4{,}0$, besonders bevorzugt $\leq 3{,}5$ und am meisten bevorzugt $\leq 3{,}1$. Das Li/Si-Verhältnis im Anodenmaterial im vollständig geladenen Zustand der Lithium-Ionen-Batterie ist vorzugsweise $\geq 0{,}22$, besonders bevorzugt $\geq 0{,}44$ und am meisten bevorzugt $\geq 0{,}66$.

Die Kapazität des Siliciums des Anodenmaterials der Lithium-Ionen-Batterie wird vorzugsweise zu $\leq 80\%$, besonders bevorzugt zu $\leq 70\%$ und am meisten bevorzugt zu $\leq 60\%$ genutzt, bezogen auf eine Kapazität von 4200 mAh pro Gramm Silicium.

Die erfindungsgemäßen Kern-Schale-Kompositpartikel zeichnen sich durch ein verbessertes elektrochemisches Verhalten aus und führen zu Lithiumionen-Batterien mit hohen volumetrischen Kapazitäten und hervorragenden Anwendungseigenschaften. Die Schale bzw. die Kern-Schale-Kompositpartikel sind permeabel für Lithium-Ionen und Elektronen und ermöglichen somit den Ladungstransport. Dem elektrochemischen Mahlen wird durch den erfindungsgemäßen Aufbau der Kern-Schale-Kompositpartikel entgegengewirkt. Die SEI in Lithiumionen-Batterien kann mit den erfindungsgemäßen Kompositpartikeln in großem Umfang reduziert werden und platzt auf Grund des erfindungsgemäßen Designs der Kompositpartikel nicht mehr oder zumindest in weit geringerem Umfang ab. All dies wirkt sich positiv auf die Zyklenbeständigkeit der erfindungsgemäßen Lithiumionen-Batterien aus. Die vorteilhaften Effekte werden durch die erfindungsgemäße Ausgestaltung der Kern-Schale-Kompositpartikel bewirkt.

Eine weitere Verbesserung dieser vorteilhaften Effekte kann erreicht werden, wenn die Batterien unter Teilbeladung betrieben werden. Diese Merkmale wirken in synergistischer Weise zusammen.

Die erfindungsgemäße Kohlenstoff-Basis der Kompositpartikel ist vorteilhaft für die Leitfähigkeit der Kern-Schale-Kompositpartikel, so dass sowohl der Lithium- als auch den Elektronentransport zum Silicium-basierten Aktivmaterial gewährleistet ist.

Die erfindungsgemäßen Kern-Schale-Kompositpartikel sind auch überraschend stabil und mechanisch belastbar und verfügen insbesondere über eine hohe Druckstabilität und eine hohe Scherstabilität.

Die nachfolgenden Beispiele dienen zur weiteren Erläuterung der Erfindung:

Sofern nicht anders angegeben, wurden die nachstehenden (Vergleichs)Beispiele an Umgebungsluft und Umgebungsdruck (1013 mbar) sowie bei Raumtemperatur (23 °C) durchgeführt. Die folgenden Methoden und Materialien wurden in den Beispielen verwendet:

Sprühtrocknung:

Es wurde ein Sprühtrockner mit Zweistoffdüse (Büchi-Trockner B-290 mit InertLoop, Düse 150) verwendet. Der Sprühtrockner wurde mit Ethanol gespült. Danach wurden die Siliciumpartikel enthaltende Dispersion eingefüllt und unter Stickstoffatmosphäre bei Normaldruck getrocknet. Am Gerät wurden folgende Einstellungen gewählt: Inlet-Temperatur 120°C, Outlet-Temperatur 50°C bis 60°C. Verdüsungskomponente im geschlossenen Kreislauf war Stickstoff mit einem Glasfluß (Flow) von 601 l/h, Aspirator: 100%, Pumprate (Feed): 30%. Die getrockneten Siliciumgranulate wurden über einen Zyklon abgeschieden.

Carbonisierung:

Carbonisierungen wurden mit einem 1200 °C Drei-Zonen Rohrofen (TFZ 12/65/550/E301) der Fa. Carbolite GmbH unter Verwendung einer Kaskadenregelung inklusive eines Probenthermoelements Typ N durchgeführt. Die angegebenen Temperaturen beziehen sich auf die Innentemperatur des Rohrofens am Ort des Thermoelements. Das jeweils zu carbonisierende Ausgangsmaterial wurde in ein oder mehrere Verbrennungsschiffchen aus Quarzglas (QCS GmbH) eingewogen und in ein Arbeitsrohr aus Quarzglas eingebracht. Die für die Carbonisierungen verwendeten Einstellungen und Prozessparameter sind in den zugehörigen Beispielen angegeben.

Klassierung/Siebung:

Die nach der Carbonsierung erhaltenen C-beschichteten Si-Aggregate wurden durch Nassiebung mit einer Siebmaschine AS 200 basic (Retsch GmbH) mit Wasser an Edelstahlsieben von Überkorn >20 $\mu$m befreit. Das pulvrige Produkt wurde in Ethanol mittels Ultraschall (Hielscher UIS250V; Amplitude 80%, Cycle: 0,75; Dauer: 30 min) dispergiert (20% Feststoffgehalt) und auf den Siebturm mit einem Sieb (20 pm) aufgebracht. Die Siebung wurde mit einer unendlichen Zeitvorwahl und einer Amplitude von 50 - 70% bei durchlaufendem Wasserstrom durchgeführt. Die unten austretende Silicium-haltige Suspension wurde über 200 nm-Nylonmembran filtriert, und der Filterrückstand im Vakuumtrockenschrank bei 100 °C und 50 - 80 mbar bis zur Massenkonstanz getrocknet.

Sphärizitätsbestimmung:

Die Sphärizität von Partikeln wurde anhand REM-Aufnahmen mithilfe des Softwarepaketes MacBiophotonics ImageJ (Abramoff, M.D., Magalhaes, P.J., Ram, S.J. "Image Processing with ImageJ". Biophotonics International, volume 11, issue 7, pp. 36-42, 2004) ausgewertet.

Porositätsbestimmung:

Die Porosität der Partikel wurde mittels einer Kombination aus Hg-Porosimetrie (zur Bestimmung des intrapartikularen Porenvolumens, DIN 66139) und He-Pyknometrie (zur Bestimmung des partikulären Feststoffvolumens, DIN 66137-2) bestimmt. Die partikuläre Porosität wurde mittels dem Verhältnis aus Hohlraumvolumen zum Gesamtvolumen ermittelt.

Rasterelektronemikroskopie (REM/ EDX):

Die mikroskopischen Untersuchungen wurden mit einem Rasterelektronemikroskop Zeiss Ultra 55 und einem energiedispersvem Röntgenspektrometer INCA x-sight durchgeführt. Die Proben wurden vor der Untersuchung zur Verhinderung von Aufladungsphänomenen mit einem Baltec SCD500 Sputter-/Carbon-Coating mit Kohlenstoff bedampft.

Transmissionselektronemikroskopie (TEM):

Die Analyse der Schichtdicke wurde an einem Transmissionselektronenmikroskop Libra 120 der Firma Zeiss durchgeführt. Die Probenpräparation erfolgte durch Einbetten in eine Harzmatrix und anschließendem Mikrotom-Schnitt.

Anorganische Analytik / Elementaranalyse:

Die in den Beispielen angegebenen C-Gehalte wurden mit einem Leco CS 230 Analysator ermittelt, zur Bestimmung von O- und ggf. N-Gehalten wurde ein Leco TCH-600 Analysator eingesetzt. Die qualitative und quantitative Bestimmung von anderen angegebenen Elementen in den erhaltenenen Kern-Schale-Kompositpartikeln wurden mittels ICP (inductively coupled plasma)-Emissionsspektrometrie (Optima 7300 DV, Fa. Perkin Elmer) bestimmt. Die Proben wurden dazu in einer Mikrowelle (Microwave 3000, Fa. Anton Paar) sauer aufgeschlossen (HF/HNO$_3$). Die ICP-OES-Bestimmung orientiert sich an der ISO 11885 "Wasserbeschaffenheit-Bestimmung von ausgewählten Elementen durch induktiv gekoppelte Plasma-Atom-Emissionsspektrometrie (ICP-OES) (ISO 11885:2007); Deutsche Fassung EN ISO 11885:2009", die zur Untersuchung saurer, wässriger Lösungen eingesetzt wird (z.B. angesäuerte Trinkwasser-, Abwasser- und andere Wasserproben, Königswasserextrakte von Böden und Sedimenten).

Partikelgrößenbestimmung:

Die Bestimmung der Partikelgrößenverteilung erfolgte nach ISO 13320 mittels statischer Laserstreuung mit einem Horiba LA 950 unter Anwendung des Mie-Modells. Dabei muss bei der Vorbereitung der Proben besondere Sorgfalt auf die Dispergierung der Partikel in der Messlösung aufgewendet werden, um statt Einzelpartikel nicht die Größe von Agglomeraten zu messen. Für die hier untersuchten C-beschichteten Si-Partikel wurden die Partikel in Ethanol dispergiert. Dazu wurde die Dispersion vor der Messung bei Bedarf 4 min in einem Hielscher Ultraschall-Laborgerät Modell UIS250v mit Sonotrode LS24d5 mit 250 W Ultraschall behandelt. Die angegebenen mittleren Partikelgrößen sind volumengewichtet.

Oberflächenmessung nach BET:

Die spezifische Oberfläche der Materialien wurde über Gasadsorption mit Stickstoff mit einem Gerät Sorptomatic 199090 (Porotec) oder Gerät SA-9603MP (Horiba) nach der BET-Methode gemäß DIN ISO 9277:2003-05 gemessen.

Si-Zugänglichkeit gegenüber flüssigen Medien

(Dichtigkeitstest):

Die Bestimmung der Zugänglichkeit von Silicium in den Kern-Schale-Kompositpartikeln gegenüber flüssigen Medien wurde mit folgender Testmethode an Materialien mit bekanntem Silicium-Gehalt (aus Elementaranalyse) durchgeführt:
0,55 g Kern-Schale-Kompositpartikel wurden mit 20 ml einer Mischung aus NaOH (4 M; H$_2$O) und Ethanol (1:1 vol.) zunächst mittels Ultraschall dispergiert und anschließend 120 min bei 40°C gerührt. Die Partikel wurden über 200 nm Nylonmembran filtriert, mit Wasser zum Neutral-pH gewaschen und anschließend im Trockenschrank bei 100°C / 50 bis 80 mbar getrocknet. Der Silicium-Gehalt nach der NaOH-Behandlung wurde bestimmt und mit dem Si-Gehalt vor dem Test verglichen. Die Dichtigkeit entspricht dem Quotienten aus dem Si-Gehalt der Probe in Prozent nach Laugebehandlung und dem Si-Gehalt in Prozent der unbehandelten Kern-Schale-Kompositpartikel.

Bestimmung der Pulverleitfähigkeit:

Der spezifische Widerstand der Kern-Schale-Kompositpartikel wurde in einem Messsystem der Fa. Keithley, 2602 System Source Meter ID 266404, bestehend aus einer Druckkammer (Stempelradius 6 mm) und einer Hydraulikeinheit (Fa. Caver, USA, Modell 3851CE-9; S/N: 130306), unter kontrolliertem Druck (bis zu 7 kN) bestimmt.

**Beispiel 1:** Kern-Schale-Kompositpartikel:

a) Herstellung einer Si-Dispersion:

Analog zu Beispiel 1 der DE 102015215415.7 (Anmeldenummer) wurde mittels Nassmahlung eine 30%ige ethanolische Dispersion von Siliciumpartikeln hergestellt.

Partikelgrößenverteilung: D50: 0,80 µm, D10: 0,33 µm, D90: 1,97 µm, Spannweite (D90-D10/D50) : 2,05.

b) Sprühtrocknung der Si-Dispersion:

Es wurden 171 g einer 1,4%igen wässrigen Lösung von Natriumcarboxymethylcellulose (NaCMC) bei 25°C vorgelegt und unter Rühren mit 221 g destilliertem Wasser verdünnt. Anschließend wurden unter Rühren mit einem Dissolver 329 g der in Schritt a) hergestellten Si-Dispersion dazu gegeben. Der Gewichtsanteil des Polymers NaCMC lag somit bei 2,5 Gew.%, bezogen auf den Silicium-Anteil. Die erhaltene homogene Dispersion wurde anschließend sprühgetrocknet.

REM-Aufnahmen der Sprühtrocknungsprodukte zeigten kugelförmige Si-Granulat-Partikel mit Durchmessern im Bereich von 2 bis 25 µm.

c) Thermische Behandlung der Sprühtrocknungsprodukte:

Die Sprühtrocknungsprodukte aus Schritt b) wurden unter Luft 4 Stunden bei 250 °C thermisch behandelt.

Die so erhaltenen Si-Aggregate waren in Ethanol nicht redispergierbar.

d) Herstellung von Kern-Schale-Kompositpartikeln:

20,10 g der Si-Aggregate aus Schritt c) und 2,22 g Pech (Petromasse ZL 250M) wurden bei 80 rpm für 3 h mechanisch mittels Kugelmühlen-Rollbank (Siemens/ Groschopp) gemischt. 22,44 g der so erhaltenen Mischung wurde in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit $N_2/H_2$ als Intertgas carbonisiert: Zuerst Heizrate 10 °C/min, Temperatur 350 °C, Haltedauer 30 min, $N_2/H_2$-Flussrate 200 ml/min; danach direkt weiter mit Heizrate 3 °C/min, Temperatur 550 °C; dann direkt weiter mit Heizrate 10 °C/min, Temperatur 1000 °C, dann Haltedauer 2 h, $N_2/H_2$-Flussrate 200 ml/min.

Nach dem Abkühlen wurden 21,45 g eines schwarzen Pulvers erhalten (Carbonisierungsausbeute 96%), welches mittels Nasssiebung von Überkorn befreit wurde.

Es wurden 11,34 g Kern-Schale-Kompositpartikel mit einer Partikelgröße von D99 < 20 µm erhalten.

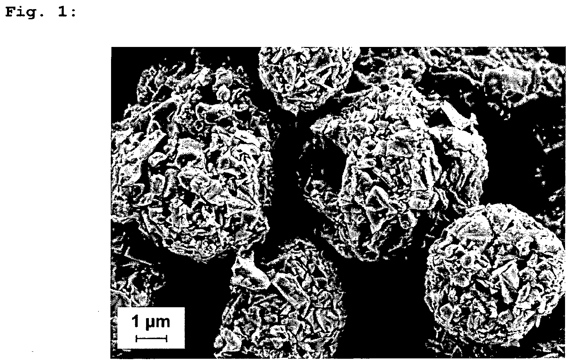

Fig. 1 zeigt eine REM-Aufnahme der Kern-Schale-Kompositpartikel aus Beispiel 1d (7.500-fache Vergrößerung).

Tabelle 1: Eigenschaften der Produkte aus Beispiel (Bsp.) 1:

|  | Einheit | Bsp.1a | Bsp.1b | Bsp.1c | Bsp.1d |
|---|---|---|---|---|---|
| Porosität (Kern) | [Vol.-%] | n.z. | n.b. | 58 | n.b. |
| Aggregation der Si-Partikel |  | Nein | Nein | Ja | Ja |
| D10-Wert | [µm] | n.b. | n.b. | 1,37 | 4,91 |
| D50-Wert | [µm] | 0,80 | n.b. | 4,26 | 7,66 |
| D90-Wert | [µm] | n.b. | n.b. | 8,70 | 11,52 |
| D90-D10/D50 |  | 2,05 | n.b. | 1,72 | 0,86 |
| Modalität |  | monomodal | n.b. | monomodal | monomodal |
| mittlere Sphärizität |  | splittrig | n.b. | 93 | 88 |
| Dichtigkeit | [%] | 0 | 0 | 0 | 99 |
| Pulverleitfähigkeit | [µS/cm] | n.b. | n.b. | 0,15 | 275677.09 |
| BET | [m$^2$/g] | 15,1 | 12,6 | 10,7 | 5,6 |
| C-Gehalt | [wt.-%] | 0,25 | 1,19 | 0,02 | 6,39 |
| O-Gehalt | [wt.-%] | 1,14 | 2,52 | 3,83 | 2,21 |
| H-Gehalt | [wt.-%] | 0,14 | 0,29 | 0,06 | 0,02 |
| N-Gehalt | [wt.-%] | 0,16 | 0,05 | 0,01 | 0,12 |

# EP 3 545 572 B1

(fortgesetzt)

|  | Einheit | Bsp.1a | Bsp.1b | Bsp.1c | Bsp.1d |
|---|---|---|---|---|---|
| Si-Gehalt | [wt.-%] |  |  | ≥92 | ≥86 |
| n.b.: nicht bestimmt<br>n.z.: nicht zutreffend |  |  |  |  |  |

**Beispiel 2**:

Anode mit den Kern-Schale-Kompositpartikeln aus Beispiel 1d: 7,00 g der Kern-Schale-Kompositpartikel aus Beispiel 1d wurden in 12,5 g einer wässrigen Lithiumpolyacrylat-Lösung (hergestellt aus LiOH und Polyacrylsäure, Molekulargewicht 450k, Sigma-Aldrich, Art.Nr. 181285) (4 Gew.-%ig; pH 6,9) mittels Dissolver bei einer Umlaufgeschwindigkeit von 4,5 m/s für 5 min und nach Zugabe von 7,51 g Wasser weitere 15 min bei 6 m/s unter Kühlung bei 20°C dispergiert. Anschließend erfolgte die Zugabe von 2,50 g Graphit (Imerys, KS&L) woraufhin erneut bei einer Umlaufgeschwindigkeit von 12 m/s für 30 min dispergiert wurde. Nach Entgasen wurde die Dispersion mittels eines Filmziehrahmens mit 0,12 mm Spalthöhe (Erichsen, Modell 360) auf eine Kupferfolie (Schlenk Metallfolien, SE-Cu58) mit Dicke von 0,030 mm aufgebracht. Die so hergestellte Elektrodenbeschichtung wurde anschließend 120 min bei 80°C und 1 bar Luftdruck getrocknet. Das mittlere Flächengewicht der trockenen Anodenbeschichtung betrug 3,11 mg/cm$^2$ und die Beschichtungsdicke 0,70 g/cm$^3$.

**Beispiel 3:**

Lithium-Ionen-Batterie mit der Anode aus Beispiel 2:

Die elektrochemischen Untersuchungen wurden an einer Knopfzelle (Typ CR2032, Hohsen Corp.) in 2-Elektroden-Anordnung durchgeführt. Die Elektrodenbeschichtung aus Beispiel 2 wurde als Gegenelektrode bzw. negative Elektrode (Dm = 15 mm) eingesetzt. Eine Beschichtung auf Basis von Lithium-Nickel-Mangan-Kobaltoxid 6:2:2 mit einem Aktivmaterialgehalt von 94,0 % und mittlerem Flächengewicht von 14,82 mg/cm$^2$ wurde als Arbeitselektrode bzw. positive Elektrode (Dm = 15 mm) verwendet. Ein mit 60 $\mu$l Elektrolyt getränktes Glasfaser-Filterpapier (Whatman, GF Type A/E) diente als Separator (Dm = 16 mm). Der verwendete Elektrolyt bestand aus einer 1,0-molaren Lösung von Lithiumhexafluorophosphat in einem 2:8 (v/v) Gemisch von Fluorethylencarbonat und Diethylencarbonat. Der Bau der Zelle erfolgte in einer Glovebox ($H_2O$ und $O_2$ < 1 ppm). der Wassergehalt in der Trockenmasse aller verwendeten Komponenten lag unterhalb von 20 ppm.

Elektrochemische Testung:

Die elektrochemische Testung wurde bei 20°C durchgeführt. Das Laden der Zelle erfolgte im cc/cv-Verfahren (constant current / constant voltage) mit konstantem Strom von 5 mA/g (entspricht C/25) im ersten Zyklus und von 60 mA/g (entspricht C/2) in den darauffolgenden Zyklen und nach Erreichen der Spannungsgrenze von 4,2 V mit konstanter Spannung bis Unterschreiten eines von 4,2 V mit konstanter Spannung bis Unterschreiten eines Stroms von 1,2 mA/g (entspricht C/100) bzw. 15 mA/g (entspricht C/8). Das Entladen der Zelle erfolgte im cc-Verfahren (constant current) mit konstantem Strom von 5 mA/g (entspricht C/25) im ersten Zyklus und von 60 mA/g (entspricht C/2) in den darauffolgenden Zyklen bis Erreichen der Spannungsgrenze von 3,0 V. Der gewählte spezifische Strom bezog sich auf das Gewicht der Beschichtung der positiven Elektrode.

Auf Grund der Rezeptierung in den Beispielen 2 und 3 wurde die Lithium-Ionen-Batterie durch Zellbalancing unter Teil-Lithiierung betrieben. Die Ergebnisse der elektrochemischen Austestung sind in Tabelle 2 zusammengefasst.

**Vergleichsbeispiel 4:**

Anode mit den Siliciumpartikeln aus Beispiel 1a:

11,0 g der verdünnten, ethanolischen Si-Dispersion (21,8 Gew.-%ig) aus Beispiel 1a wurden in 12,52 g einer 1,4 Gew.-%igen Lösung von Natrium-Carboxymethylcellulose (Daicel, Grade 1380) in Wasser mittels Dissolver bei einer Umlaufgeschwindigkeit von 4,5 m/s für 5 min und von 17 m/s für 30 min unter Kühlung bei 20°C dispergiert. Nach Zugabe von 0,856 g Graphit (Imerys, KS6L C) wurde dann weitere 30 min bei einer Umlaufgeschwindigkeit von 12 m/s gerührt. Nach Entgasen wurde die Dispersion mittels eines Filmziehrahmens mit 0,20 mm Spalthöhe (Erichsen, Modell 360) auf eine Kupferfolie mit Dicke von 0,030 mm (Schlenk Metallfolien, SE-Cu58) aufgebracht. Die so hergestellte Anodenbeschichtung wurde anschließend 60 min bei 80°C und 1 bar Luftdruck getrocknet. Das mittlere Flächengewicht der trockenen Anodenbeschichtung betrug 2,90 mg/cm$^2$ und die Beschichtungsdichte 0,96 g/cm3.

**Vergleichsbeispiel 5:**

Lithium-Ionen-Batterie mit der Anode aus Vergleichsbeispiel 4:

Die elektrochemischen Untersuchungen wurden an einer Knopfzelle (Typ CR2032, Hohsen Corp.) in 2-Elektroden-Anordnung durchgeführt. Die Elektrodenbeschichtung aus Vergleichsbeispiel 4 wurde als Gegenelektrode bzw. negative Elektrode (Dm = 15 mm) ein-Mangan-Kobaltoxid 1:1:1 mit Gehalt von 94,0 % und mittlerem Flächengewicht von 14,5 mg/cm$^2$ als Arbeitselektrode bzw. positive Elektrode (Dm = 15 mm) verwendet. Ein mit 120 $\mu$l Elektrolyt getränktes, Glasfaser-Filterpapier (Whatman, GD Type D) diente als Separator (Dm = 16 mm). Der verwendete Elektrolyt bestand aus einer 1,0-molaren Lösung von Lithiumhexafluorophosphat in einem 3:7 (v/v) Gemisch von Fluorethylencarbonat und Ethylmethylcarbonat, welche mit 2,0 Gew.-% Vinylencarbonat versetzt war. Der Bau der Zelle erfolgte in einer Glovebox (< 1 ppm $H_2O$, $O_2$), der Wassergehalt in der Trockenmasse aller verwendeten Komponenten lag unterhalb von 20 ppm.

Auf Grund der Rezeptierung in den Vergleichsbeispielen 4 und 5 wurde die Lithium-Ionen-Batterie durch Zellbalancing unter Teil-Lithiierung betrieben.

Die elektrochemische Testung wurde identisch durchgeführt, wie für Beispiel 3 beschrieben. Die Ergebnisse der elektrochemischen Austestung sind in Tabelle 2 zusammengefasst.

Tabelle 2: Ergebnisse der elektrochemischen Austestung der (Vergleichs)Beispiele 3 und 5:

| (V)Bsp. | Entladekapazität nach Zyklus 1 [mAh/cm$^2$] | Zyklenzahl mit $\geq$ 80% Kapazitätserhalt |
|---|---|---|
| 3 | 2,03 | 103 |
| 5 | 1,99 | 60 |

**Patentansprüche**

1. Kern-Schale-Kompositpartikel, wobei die Schale auf Kohlenstoff basiert und unporös ist und der Kern ein poröses Aggregat ist enthaltend mehrere Siliciumpartikel und Kohlenstoff,
   wobei die Siliciumpartikel durchschnittliche Partikelgrößen $d_{50}$ von 0,5 bis 5 $\mu$m haben und im Kern enthalten sind mit $\geq$ 80 Gew.-%, bezogen auf das Gesamtgewicht der Kern-Schale-Kompositpartikel und
   die Kern-Schale-Kompositpartikel 91 bis 99 Gew.-% Siliciumpartikel enthalten, bezogen auf das Gesamtgewicht der Kern-Schale-Kompositpartikel,
   mit der Maßgabe, dass die Kern-Schale-Kompositpartikel keinen Graphit enthalten.

2. Kern-Schale-Kompositpartikel gemäß Anspruch 1, **dadurch gekennzeichnet, dass** die Schale der Kern-Schale-Kompositpartikel erhältlich ist durch Carbonisieren von einem oder mehreren Kohlenstoff-Precursoren ausgewählt aus der Gruppe umfassend Teere, Peche, Polyacrylnitril und Kohlenwasserstoffe mit 1 bis 20 Kohlenstoffatomen.

3. Kern-Schale-Kompositpartikel gemäß Anspruch 1 oder 2, **dadurch gekennzeichnet, dass** der Kern der Kern-Schale-Kompositpartikel eine Porosität von 30 bis 75% hat.

4. Kern-Schale-Kompositpartikel gemäß Anspruch 1 bis 3, **dadurch gekennzeichnet, dass** die Schale eine Porosität von $\leq$ 2% hat.

5. Kern-Schale-Kompositpartikel gemäß Anspruch 1. bis 4, **dadurch gekennzeichnet, dass** die Poren der Schale < 10 nm sind.

6. Kern-Schale-Kompositpartikeil gemäß Anspruch 1 bis 5, **dadurch gekennzeichnet, dass** die Kern-Schale-Kompositpartikel zu 91 bis 98 Gew.-% Siliciumpartikel enthalten, bezogen auf das Gesamtgewicht der Kern-Schale-Kompositpartikel.

7. Kern-Schale-Kompositpartikel gemäß Anspruch 1 bis 6, **dadurch gekennzeichnet, dass** die Kern-Schale-Kompositpartikel 1 bis 10 Gew.-% Kohlenstoff enthalten, bezogen auf das Gesamtgewicht der Kern-Schale-Kompositpartikel.

8. Verfahren zur Herstellung der Kern-Schale-Kompositpartikel aus Anspruch 1 bis 7, indem

   1) Dispersionen enthaltend Siliciumpartikel mit durchschnittlichen Partikelgrößen $d_{50}$ von 0,5 bis 5 $\mu$m, ein oder mehrere organische Bindemittel und ein oder mehrere Dispergiermittel getrocknet werden,
   2) gegebenenfalls die Trocknungsprodukte aus Schritt 1) thermisch behandelt werden und
   3) auf die Trocknungsprodukte aus Schritt 1) oder auf die thermisch behandelten Trocknungsprodukte aus Schritt 2) ein oder mehrere Kohlenstoff-Precursoren carbonisiert werden.

9. Verfahren zur Herstellung der Kern-Schale--Kompositpartikel gemäß Anspruch 8, **dadurch gekennzeichnet, dass** ein oder mehrere organische Bindemittel ausgewählt werden aus der Gruppe umfassend Resorcin-Formaldehyd-Harz, Phenol-Formaldehyd-Harz, Lignin, Kohlenhydrate, Polyamide, Polyimide, Polyether, Polyvinylalkohole, Homo- und Copolymere von Vinylestern, Homo- und Copolymere der (Meth)Acrylsäure, Polyacrylnitrile und Polyvinylpyrrolidone.

10. Verwendung der Kern-Schale-Kompositpartikel aus Anspruch 1 bis 7 in Elektrodenmaterialien, insbesondere in Anodenmaterialien für Lithiumionen-Batterien.

11. Lithium-Ionen-Batterien umfassend eine Kathode, eine Anode, einen Separator und einen Elektrolyt, **dadurch gekennzeichnet, dass** die Anode auf einem Anodenmaterial basiert, das ein oder mehrere Kern-Schale-Kompositpartikel aus Anspruch 1 bis 7 enthält.

12. Lithium-Ionen-Batterien gemäß Anspruch 11, **dadurch gekennzeichnet, dass** das Anodenmaterial in der vollständig geladenen Lithium-Ionen-Batterie nur teilweise lithiiert ist.

13. Lithium-Ionen-Batterien gemäß Anspruch 12, **dadurch gekennzeichnet, dass** die Anode in der vollständig geladenen Lithium-Ionen-Batterie mit 600 bis 1500 mAh/g beladen ist, bezogen auf die Masse der Anode.

14. Lithium-Ionen-Batterien gemäß Anspruch 12 oder 13, **dadurch gekennzeichnet, dass** im vollständig geladenen Zustand der Lithium-Ionen-Batterie das Verhältnis der Lithiumatome zu den Siliciumatomen im Anodenmaterial $\leq$ 2,2 beträgt.

15. Lithium-Ionen-Batterien gemäß Anspruch 12 bis 14, **dadurch gekennzeichnet, dass** die Kapazität des Siliciums des Anodenmaterials der Lithium-Ionen-Batterie zu $\leq$ 50% genutzt wird, bezogen auf die maximale Kapazität von 4200 mAh pro Gramm Silicium.

## Claims

1. Core-shell composite particles, wherein the shell is based on carbon and is nonporous and the core is a porous aggregate containing a plurality of silicon particles and carbon,
   where the silicon particles have average particle sizes $d_{50}$ of from 0.5 to 5 $\mu$m and are present in the core in a proportion of $\geq$ 80% by weight, based on the total weight of the core-shell composite particles, and
   the core-shell composite particles contain from 91 to 99% by weight of silicon particles, based on the total weight of the core-shell composite particles,
   with the proviso that the core-shell composite particles do not contain any graphite.

2. Core-shell composite particles according to Claim 1, **characterized in that** the shell of the core-shell composite particles is obtainable by carbonization of one or more carbon precursors selected from the group consisting of tars, pitches, polyacrylonitrile and hydrocarbons having from 1 to 20 carbon atoms.

3. Core-shell composite particles according to Claim 1 or 2, **characterized in that** the core of the core-shell composite particles has a porosity of from 30 to 75%.

4. Core-shell composite particles according to any of Claims 1 to 3, **characterized in that** the shell has a porosity of $\leq$ 2%.

# EP 3 545 572 B1

**5.** Core-shell composite particles according to any of Claims 1 to 4, **characterized in that** the pores of the shell are < 10 nm.

**6.** Core-shell composite particles according to any of Claims 1 to 5, **characterized in that** the core-shell composite particles contain from 91 to 98% by weight of silicon particles, based on the total weight of the core-shell composite particles.

**7.** Core-shell composite particles according to any of Claims 1 to 6, **characterized in that** the core-shell composite particles contain from 1 to 10% by weight of carbon, based on the total weight of the core-shell composite particles.

**8.** Process for producing the core-shell composite particles of any of Claims 1 to 7, wherein

1) dispersions containing silicon particles having average particles sizes $d_{50}$ of from 0.5 to 5 $\mu$m, one or more organic binders and one or more dispersion media are dried,
2) the products of drying from step 1) are optionally thermally treated and
3) one or more carbon precursors are carbonized on the products of drying from step 1) or on the thermally treated products of drying from step 2).

**9.** Process for producing the core-shell composite particles according to Claim 8, **characterized in that** one or more organic binders are selected from the group consisting of resorcinol-formaldehyde resin, phenolformaldehyde resin, lignin, carbohydrates, polyamides, polyimides, polyethers, polyvinyl alcohols, homopolymers and copolymers of vinyl esters, homopolymers and copolymers of (meth)acrylic acid, polyacrylonitriles and polyvinylpyrrolidones.

**10.** Use of the core-shell composite particles of any of Claims 1 to 7 in electrode materials, in particular in anode materials for lithium ion batteries.

**11.** Lithium ion batteries comprising a cathode, an anode, a separator and an electrolyte, **characterized in that** the anode is based on an anode material containing one or more core-shell composite particles of any of Claims 1 to 7.

**12.** Lithium ion batteries according to Claim 11, **characterized in that** the anode material is only partially lithiated in the fully charged lithium ion battery.

**13.** Lithium ion batteries according to Claim 12, **characterized in that** the anode in the fully charged lithium ion battery is charged with from 600 to 1500 mAh/g, based on the mass of the anode.

**14.** Lithium ion batteries according to Claim 12 or 13, **characterized in that** the ratio of the lithium atoms to the silicon atoms in the anode material is $\leq 2.2$ in the fully charged state of the lithium ion battery.

**15.** Lithium ion batteries according to any of Claims 12 to 14, **characterized in that** the capacity of the silicon of the anode material of the lithium ion battery is utilized to an extent of $\leq 50\%$, based on the maximum capacity of 4200 mAh per gram of silicon.

**Revendications**

**1.** Particules composites noyau-enveloppe, l'enveloppe étant à base de carbone et étant non poreuse et le noyau étant un agrégat poreux contenant plusieurs particules de silicium et du carbone,
les particules de silicium possédant des grosseurs moyennes de particule $d_{50}$ de 0,5 à 5 $\mu$m et étant contenues dans le noyau à raison de $\geq 80$ % en poids, par rapport au poids total des particules composites noyau-enveloppe et les particules composites noyau-enveloppe contenant 91 à 99 % en poids de particules de silicium, par rapport au poids total des particules composites noyau-enveloppe,
étant entendu que les particules composites noyau-enveloppe ne contiennent pas de graphite.

**2.** Particules composites noyau-enveloppe selon la revendication 1, **caractérisées en ce que** l'enveloppe des particules composites noyau-enveloppe peut être obtenue par carbonisation d'un ou plusieurs précurseurs de carbone choisis dans le groupe comprenant les goudrons, le brai, un polyacrylonitrile et des hydrocarbures comportant 1 à 20 atome(s) de carbone.

**3.** Particules composites noyau-enveloppe selon la revendication 1 ou 2, **caractérisées en ce que** le noyau des particules composites noyau-enveloppe possède une porosité de 30 à 75 %.

**4.** Particules composites noyau-enveloppe selon les revendications 1 à 3, **caractérisées en ce que** l'enveloppe possède une porosité ≤ 2 %.

**5.** Particules composites noyau-enveloppe selon les revendications 1 à 4, **caractérisées en ce que** les pores de l'enveloppe sont < 10 nm.

**6.** Particules composites noyau-enveloppe selon les revendications 1 à 5, **caractérisées en ce que** les particules composites noyau-enveloppe contiennent 91 à 98 % en poids de particules de silicium, par rapport au poids total des particules composites noyau-enveloppe.

**7.** Particules composites noyau-enveloppe selon les revendications 1 à 6, **caractérisées en ce que** les particules composites noyau-enveloppe contiennent 1 à 10 % en poids de carbone, par rapport au poids total des particules composites noyau-enveloppe.

**8.** Procédé pour la préparation des particules composites noyau-enveloppe des revendications 1 à 7, dans lequel

1) des dispersions contenant des particules de silicium dotées de grosseurs moyennes de particule $d_{50}$ de 0,5 à 5 μm, un ou plusieurs liants organiques et un ou plusieurs agents de dispersion, sont séchées,
2) éventuellement, les produits de séchage de l'étape 1) sont traités thermiquement et
3) un ou plusieurs précurseurs de carbone sont carbonisés sur les produits de séchage de l'étape 1) ou sur les produits de séchage traités thermiquement de l'étape 2).

**9.** Procédé pour la préparation des particules composites noyau-enveloppe selon la revendication 8, **caractérisé en ce qu'**un ou plusieurs liants organiques sont choisis dans le groupe comprenant une résine résorcinol-formaldéhyde, une résine phénol-formaldéhyde, la lignine, les glucides, les polyamides, les polyimides, les polyéthers, les poly(alcools vinyliques), les homopolymères et les copolymères d'esters de vinyle, les homopolymères et les copolymères d'acide (méth)acrylique, les polyacrylonitriles et les polyvinylpyrrolidones.

**10.** Utilisation des particules composites noyau-enveloppe des revendications 1 à 7 dans des matériaux d'électrodes, en particulier dans des matériaux d'anode pour des batteries lithium-ion.

**11.** Batteries lithium-ion comprenant une cathode, une anode, un séparateur et un électrolyte, **caractérisées en ce que** l'anode est à base d'un matériau d'anode qui contient une ou plusieurs particules composites noyau-enveloppe des revendications 1 à 7.

**12.** Batteries lithium-ion selon la revendication 11, **caractérisées en ce que** le matériau d'anode dans la batterie lithium-ion totalement chargée est seulement partiellement lithié.

**13.** Batteries lithium-ion selon la revendication 12, **caractérisées en ce que** l'anode dans la batterie lithium-ion totalement chargée est chargée avec 600 à 1 500 mAh/g, par rapport à la masse de l'anode.

**14.** Batteries lithium-ion selon la revendication 12 ou 13, **caractérisées en ce que** dans l'état totalement chargé de la batterie lithium-ion, le rapport des atomes de lithium aux atomes de silicium dans le matériau d'anode est ≤ 2,2.

**15.** Batteries lithium-ion selon les revendications 12 à 14, **caractérisées en ce que** la capacité du silicium du matériau d'anode de la batterie lithium-ion est utilisée à ≤ 50 %, par rapport à la capacité maximale de 4 200 mAh par gramme de silicium.

Fig. 1:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015051309 A
- US 9209456 B
- CN 104362311
- US 20110165468 A
- KR 20150128432
- KR 20150128430
- EP 1205989 A2
- JP 2008277232 A
- WO 2015117838 A
- DE 102015215415


**In der Beschreibung aufgeführte Nicht-Patentliteratur**

- **L. CHEN.** *Materials Science and Engineering B,* 2006, vol. 131, 186-190
- **Z. SHAO.** *Journal of Power Sources,* 2014, vol. 248, 721-728
- **AUS Y. CUI.** *ACS NANO,* 2015, vol. 9 (3), 2540-2547
- **ABRAMOFF, M.D. ; MAGALHAES, P.J. ; RAM, S.J.** Image Processing with ImageJ. *Biophotonics International,* 2004, vol. 11 (7), 36-42